# EUROPEAN PATENT APPLICATION

(11) **EP 4 006 837 A1**
(43) Date of publication of application: **01.06.2022**
(21) Application number: 20848538.3
(22) Date of filing: 28.07.2020
(51) Int. Cl.: G06T 7/292

(54) **TARGET TRACKING AND MONITORING DISPLAY METHOD AND TARGET TRACKING AND MONITORING DISPLAY APPARATUS, ELECTRONIC DEVICE, AND STORAGE MEDIUM**

(30) Priority: 30.07.2019 CN 201910694747
(71) Applicant: Hangzhou Hikvision Digital Technology Co., Ltd., Hangzhou, Zhejiang 310051 (CN)
(72) Inventor: XU, Jiabao, Hangzhou, Zhejiang 310051 (CN); HUANG, Hongyi, Hangzhou, Zhejiang 310051 (CN)
(74) Representative: BRP Renaud & Partner mbB Rechtsanwälte Patentanwälte Steuerberater
(86) International application number: PCT/CN2020/105042
(87) International publication number: WO 2021/018115

(57) **Abstract**

The embodiments of the present disclosure provide A method for tracking, monitoring and displaying a target, and A method for tracking, monitoring and displaying a target apparatus, an electronic device and a storage medium, relates to the field of security monitoring, and solves the problem of poor experience of a user when observing the target intruding into a radar detection area in the client interface. The method comprises: determining a position of a target within a detection range of the radar; determining a position of a camera for tracking and monitoring the target, wherein the camera is one of cameras associated with the radar; and drawing and displaying, according to the position of the target and the position of the camera for tracking and monitoring the target, a pattern indicating that the camera tracks and monitors the target. The present disclosure may be applied to display a tracking and monitoring process when using a radar-camera linkage system to track and monitor the target.

## Description

The present application claims the priority of a Chinese patent application No.201910694747.4, filed with China National Intellectual Property Administration on July 30, 2019, and entitled "TARGET TRACKING AND MONITORING DISPLAY METHOD AND TARGET TRACKING AND MONITORING DISPLAY APPARATUS", which is incorporated herein by reference in its entirety.

### Technical field

The present disclosure relates to the technical field of security monitoring, in particular to A method for tracking, monitoring and displaying a target, and An apparatus for tracking, monitoring and displaying a target, an electronic device and a storage medium.

### Background

A radar and camera linkage refers to adding a camera (such as a ball camera) to a radar, and configuring a relative relationship between the radar and the camera, and when the radar detects a target, it may control the camera to track and monitor the target. In related technologies, users cannot intuitively observe the process of tracking and monitoring the target by the camera; in a case where multiple targets invade a radar detection area simultaneously and the radar is associated with multiple cameras; users cannot intuitively observe that which camera is tracking and monitoring which target, resulting in poor user experience.

### Summary

The purpose of embodiments of the present disclosure is to provide a method for tracking, monitoring and displaying a target, and an apparatus for tracking, monitoring and displaying a target, an electronic device and a storage medium, so as to improve the user experience.

To achieve above purpose, the embodiments of the present disclosure disclose a method for tracking, monitoring and displaying a target, which includes:
determining a position of a target within a detection range of a radar;
determining a position of a camera for tracking and monitoring the target, wherein the camera is one of cameras associated with the radar; and
drawing and displaying, according to the position of the target and the position of the camera, a pattern indicating that the camera tracks and monitors the target.

To achieve the above purpose, the embodiments of the present disclosure disclose an apparatus for tracking, monitoring and displaying a target, which includes:
a determination module used for determining a position of a target within a detection range of a radar and determining a position of a camera for tracking and monitoring the target, wherein the camera is one of cameras associated with the radar; and
a drawing module used for drawing and displaying, according to the position of the target and the position of the camera, a pattern indicating that the camera tracks and monitors the target.

To achieve above purpose, the embodiments of the present disclosure further disclose an electronic device including a processor and a memory, wherein
the memory is used for storing a computer program; and
the processor is used for implementing the method for tracking, monitoring and displaying a target provided by the embodiment of the present disclosure when executing the computer program stored in the memory.

To achieve above purpose, the embodiments of the present disclosure further disclose a non-transitory storage medium, in which a computer program is stored, which when executed by the processor, implements the method for tracking, monitoring and displaying a target provided by the embodiments of the present disclosure.

To achieve above purpose, the embodiments of the present disclosure further disclose a computer program product, which when running on a computer, implements the method for tracking, monitoring and displaying a target provided by the embodiments of the present disclosure.

The embodiments of the present disclosure provides a method for tracking, monitoring and displaying a target, and an apparatus for tracking, monitoring and displaying a target, an electronic device and a storage medium, by determining a position of a target within a detection range of a radar, determining a position of a camera for tracking and monitoring the target, wherein the camera is one of cameras associated with the radar, and drawing and displaying, according to the position of the target and the position of the camera, a pattern indicating that the camera tracks and monitors the target, which realizes that when a target is intruding into a radar detection area, a user may intuitively observe according to the pattern in the client interface that which camera is tracking and monitoring the target, and as the target moves in the radar detection area, the position of the target and the position of the camera for tracking and monitoring the target may be determined in real time, and the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

### Brief Description of the Drawings

In order to explain the embodiments of the present disclosure and the technical solutions of the prior art more clearly, the drawings used in the embodiments and the prior art will be described briefly in the following, and it is apparent that the drawings in the following description are only some embodiments of the present disclosure, and for those skilled in the art, other drawings may be obtained based on these drawings without creative efforts.
Fig. 1 is a schematic flow diagram of A method for tracking, monitoring and displaying a target according to an embodiment of the present disclosure;
Fig. 2 is a schematic flow diagram of A method for tracking, monitoring and displaying a target according to another embodiment of the present disclosure;
Fig. 2(a) is a schematic diagram of a client interface according to an embodiment of the present disclosure;
Fig. 2(b) is a schematic diagram of a client interface according to another embodiment of the present disclosure;
Fig. 2(c) is a schematic diagram of a client interface according to yet another embodiment of the present disclosure;
Fig. 3 is a schematic flow diagram of A method for tracking, monitoring and displaying a target according to yet another embodiment of the present disclosure;
Fig. 3(a) is a schematic diagram of a client interface according to yet another embodiment of the present disclosure;
Fig. 3(b) is a schematic diagram of a client interface according to yet another embodiment of the present disclosure;
Fig. 3(c) is a schematic diagram of a client interface according to yet another embodiment of the present disclosure;
Fig. 3(d) is a schematic diagram of a client interface according to yet another embodiment of the present disclosure;
Fig. 3(e) is a schematic diagram of a client interface according to yet another embodiment of the present disclosure;
Fig. 4 is a schematic structural diagram of An apparatus for tracking, monitoring and displaying a target according to an embodiment of the present disclosure;
Fig. 5 is a schematic structural diagram of An apparatus for tracking, monitoring and displaying a target according to another embodiment of the present disclosure;
Fig. 6 is a schematic structural diagram of An apparatus for tracking, monitoring and displaying a target according to yet another embodiment of the present disclosure;
Fig. 7 is a schematic structural diagram of an electronic device according to an embodiment of the present disclosure.

### Detailed Description

In order to make the purpose, technical solutions and advantages of the present disclosure more clear, the present disclosure will be further explained in detail with reference to the drawings and embodiments. It is apparent that the described embodiments are only part of the embodiments of the present disclosure, rather than all of them. All other embodiments obtained by those ordinary skilled in the art without creative efforts shall fall within the protection scope of the present disclosure based on the embodiments in the present disclosure.

In a related radar-camera linkage system, a client interface will display a radar detection area, a movement trajectory of a target within a detection range of the radar and a monitoring video taken by a camera, but in this display mode, a user cannot intuitively observe the process of tracking and monitoring the target by the camera, and the user experience is poor. In order to improve the sense of the user experience, the embodiments of the present disclosure provide A method for tracking, monitoring and displaying a target, and An apparatus for tracking, monitoring and displaying a target, an electronic device and a storage medium.

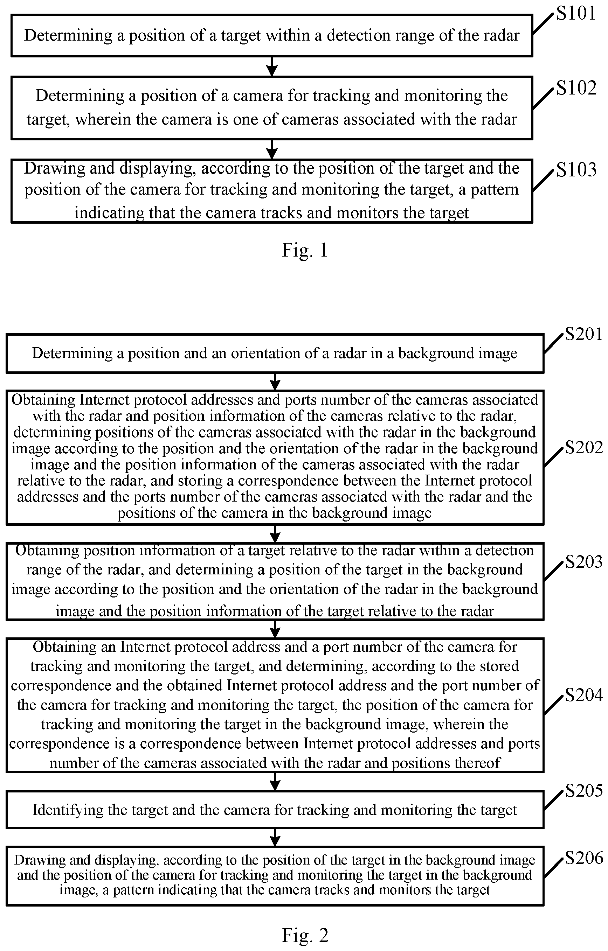

Referring to Fig. 1, Fig. 1 is a schematic flow diagram of A method for tracking, monitoring and displaying a target according to an embodiment of the present disclosure, and the method includes:
S 101: Determining a position of a target within a detection range of a radar.

Here, it is possible to determine an actual position of the target within the detection range of the radar, or the position of the target in a background image within the detection range of the radar.

Specifically, when tracking and monitoring the target within the detection range of the radar by using the radar-camera linkage system, the user may set the radar in advance, such as setting a position orientation of the radar, adding to the radar an Internet protocol address and a port number of the camera associated with the radar, identifying a positional relationship between the camera and the radar to establish a relative position coordinate conversion formula between the radar and the camera, and configuring a radar-camera linkage strategy. When the radar detects that a target is intruding into a detection range of the radar, the radar may obtain an echo signal reflected by the target, that is, the radar emits electromagnetic waves to irradiate the target, and the target reflects to the radar the electromagnetic waves irradiated, and the electromagnetic waves reflected by the target received by the radar are the echo signal reflected by the target. The radar calculates and obtains position information of the target relative to the radar according to the echo signals, and the position information of the target relative to the radar may at least include an actual distance of the target from the radar and a bearing of the target relative to the radar.

The radar may calculate an actual position of the target according to its own actual position and orientation, in combination with the position information of the target relative to the radar, and report it to the client, so that the client may determine the actual position of the target; the radar may also report its own actual position, orientation and the position information of the target relative to the radar to the client, and the actual position of the target may be determined through an calculation by the client according to the actual position and orientation of the radar and the position information of the target relative to the radar.

Alternatively, the client interface may import a background image, which may be a map image, in advance. The user may set the position and the orientation of the radar in the background image on the client in combination with an actual deployment of the radar. Where the background image is a map image, the radar may also report the actual position and orientation to the client, after receiving which, the client converts the actual position of the radar into a map position. The position information of the target relative to the radar is reported to the client through the radar. After receiving the position information of the target relative to the radar, the client determines, according to the position and orientation of the radar in the background image and the position information of the target relative to the radar, the position of the target in the background image.

S 102: Determining a position of a camera for tracking and monitoring the target, wherein the camera is one of cameras associated with the radar.

Here, it is possible to determine an actual position of the camera for tracking and monitoring the target, or to determine a position of the camera for tracking and monitoring the target in the background image.

Specifically, the camera associated with the radar may be one camera or multiple cameras. The camera associated with the radar may be a ball camera or other PTZ cameras (PTZ: short for Pan, Tilt, Zoom, which refers to omni-directional (left and right or up and down) movement of the pan-fit, and lens zooming and zoom control). When the radar detects that a target is intruding into the detection range of the radar, where it is necessary to track and monitor the target, the radar may determine a camera for tracking and monitoring the target according to a pre-configured radar and camera linkage strategy, and convert, according to the relative position coordinate conversion formula between the radar and the camera for tracking and monitoring the target, the position information of the target relative to the radar, into the position information of the target relative to the camera and send it to the camera, so that the camera may track and monitor the target. For example, the camera is a ball camera, after receiving the position information of the target relative to itself, the ball camera may adjust a PTZ value (including at least one of a horizontal angle, a pitch angle and the zoom of the camera) to track and monitor the target.

After determining the camera for tracking and monitoring the target, the radar can calculate, according to the actual position and orientation itself, in combination with the position information of the camera relative to the radar, an actual position of the camera and report it to the client, so that the client may determine the actual position of the camera. The radar may also report its actual position, orientation and the position information of the camera relative to the radar to the client, and the actual position of the camera may be determined through a calculation by the client according to the actual position, the orientation and the position information of the camera relative to the radar. It is also possible to store a correspondence between a unique identification information of the camera associated with the radar (such as an equipment identifier, or the Internet protocol address and the port number) and the actual position thereof in the client in advance, and the radar reports the unique identification information of the camera for tracking and monitoring the target to the client, and after receiving which, the client determines the actual position of the camera in combination with the correspondence.

Alternatively, the client interface may import a background image in advance, which may be a map image. The user may set the position and the orientation of the radar in the background image on the client according to the actual deployment of the radar. Where the background image is a map image, the radar may also report the actual position and orientation to the client, and after obtaining which, the client converts the actual position of the radar into the map position. After determining the camera for tracking and monitoring the target, the radar may report to the client the position information of the camera relative to the radar, and after receiving which, the client determines, according to the position and the orientation of the radar in the background image and the position information of the camera relative to the radar, the position of the camera in the background image. It is also possible to store the correspondence between the unique identification information of the camera associated with the radar (such as an equipment identifier, or the Internet protocol address and the port number) and the position thereof in the background image in the client in advance, and the radar reports the unique identification information of the camera for tracking and monitoring the target to the client, and after receiving which, the client determines the position of the camera in the background image in combination with the correspondence.

S103: Drawing and displaying, according to the position of the target and the position of the camera for tracking and monitoring the target, a pattern indicating that the camera tracks and monitors the target.

Here, the client may import, according to the actual position of the target and the actual position of the camera for tracking and monitoring the target, the actual position of the target and the actual position of the camera for tracking and monitoring the target into a pattern drawing script, and draws a pattern indicating that the camera tracks and monitors the target. The client may also draw, according to the position of the target in the background image and the position of the camera for tracking and monitoring the target in the background image, a pattern indicating that the camera tracks and monitors the target, herein the background image may be a map image, so that the effect presented by the client interface is more realistic, which improves the sense of the user experience.

In one embodiment of the present disclosure, when drawing and displaying the pattern, the currently displayed pattern may be emptied, and then drawing and displaying, according to the position of the target and the position of the camera, a pattern indicating that the camera tracks and monitors the target can be updated.

In this way, after the pattern indicating that the camera tracks and monitors the target is drawn and displayed, the user may intuitively observe which camera is tracking and monitoring the target in the client interface according to the pattern. The process of drawing the pattern indicating that the camera tracks and monitors the target needs to achieve that after drawing, the client interface presents the pattern showing the camera, the pattern showing the target and the pattern showing the camera corresponding to the target.

The embodiment of the present disclosure provides A method for tracking, monitoring and displaying a target. By determining the position of the target within the detection range of the radar, determining the position of the camera for tracking and monitoring the target, wherein the camera is one of cameras associated with the radar, and drawing and displaying, according to the position of the target and the position of the camera, the pattern indicating that the camera tracks and monitors the target, so that when a target intrudes into the radar detection area, the user may intuitively observe that which camera is tracking and monitoring the target in the client interface according to the pattern, and as the target moves in the radar detection area, the position of the target and the position of the camera for tracking and monitoring the target may be determined in real time, and the pattern indicating that the camera tracks and monitors the target may be drawn and displayed in real time, which vividly shows the effect of the tracking and monitoring of the target by the camera in real time as the target moves, so that the user may intuitively observe the whole process of tracking and monitoring the target by the camera from the client interface, which improves the sense of the user experience.

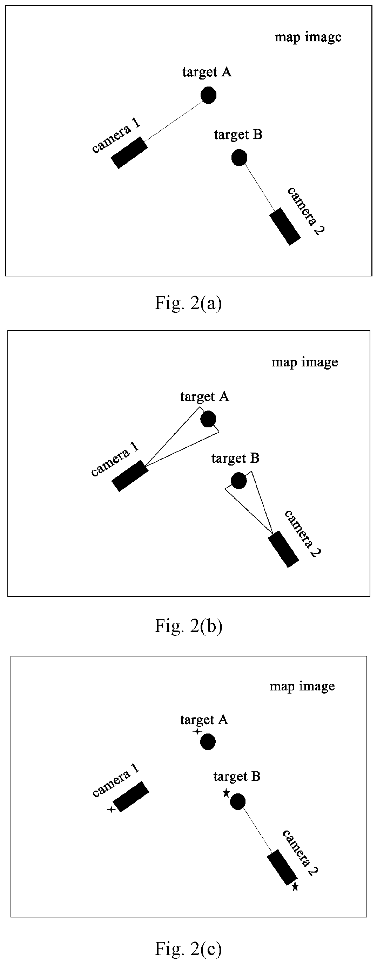

Referring to Fig. 2, Fig. 2 is a schematic flow diagram of A method for tracking, monitoring and displaying a target according to another embodiment of the present disclosure, which includes:
S201: Determining a position and an orientation of a radar in a background image.

When tracking and monitoring the target within the detection range of the radar by using the radar-camera linkage system, the user may set the radar in advance, such as setting the position orientation of the radar, adding to the radar the Internet protocol address and the port number of the camera associated with the radar, identifying the positional relationship between the camera and the radar to establish the relative position coordinate conversion formula between the radar and the camera, and configuring the radar-camera linkage strategy. The client interface may import the background image in advance, and the position and the orientation of the radar in the background image may be set on the client by the user in combination with the actual deployment of the radar. For example, the user may label the position and the orientation of the radar in the background image of the client, so that the client may obtain the position (i.e. coordinates) and the orientation of the radar in the background image set by the user.

In one embodiment of the present disclosure, the background image is a map image, and the position in the background image is the map position, so that the effect presented by the client interface is more realistic, which improves the sense of the user experience. It should be noted that in a case where the background image is the map image, the actual position and orientation may also be reported to the client by the radar, and after receiving which, the client converts the actual position of the radar into the map position.

S202: Obtaining an Internet protocol address and a port number of a camera associated with the radar and position information of the camera relative to the radar, determining a position of the camera associated with the radar in the background image according to the position and the orientation of the radar in the background image and the position information of the camera associated with the radar relative to the radar, and storing a correspondence between the Internet protocol address and the port number of the camera associated with the radar and the position of the camera in the background image.

The camera associated with the radar may be one camera or multiple cameras. The camera associated with the radar may be a ball camera or other PTZ cameras. Specifically, the radar may report the Internet protocol address and the port number of the camera associated with the radar and the position information of the camera relative to the radar to the client after receiving a signal of successful communication connection with the client; or the client may send to the radar a request for obtaining the information of the camera associated with the radar, and the radar may report the Internet protocol address and the port number of the camera associated with the radar and the position information of the camera relative to radar to the client after receiving the request, and the position information may at least include an actual distance of the camera associated with the radar from the radar and the bearing of the target relative to the radar. After obtaining the position information of the camera associated with the radar relative to the radar, the client may carry out a coordinate conversion to obtain the position information of the camera associated with the radar relative to the radar in the background image, so as to determine the position of the camera associated with the radar in the background image according to the position and the orientation of the radar in the background image and the position information of the camera associated with the radar relative to the radar in the background image.

By storing the correspondence between the Internet protocol address and the port number of the camera associated with the radar and the position of the camera in the background image, when tracking and monitoring the target intruding into the radar range, the position of the camera for tracking and monitoring the target in the background image may be quickly determined by obtaining the Internet protocol address and port number of the camera for tracking and monitoring the target and by inquiring the stored correspondence between the Internet protocol address and the port number of the camera associated with the radar and the position of the camera in the background image,. Here, in the camera-radar linkage system, it is necessary to establish a communication connection between the camera and the radar, and it is necessary to add the Internet protocol address and the port number of the camera to the radar, thus choosing the Internet protocol address and the port number as the unique identification information of the camera associated with the radar, instead of other information such as equipment identifier, so that it is unnecessary to add other information of the camera to the radar in the process of a radar configuration, thereby improving the convenience of operation and the speed of the radar configuration.

S203: Obtaining position information of a target relative to the radar within a detection range of the radar, and determining a position of the target in the background image according to the position and the orientation of the radar in the background image and the position information of the target relative to the radar.

When the radar detects that a target is intruding into the detection range of the radar, the radar may obtain the echo signals reflected by the target, that is, the radar emits electromagnetic waves to irradiate the target, and the target reflects the electromagnetic waves irradiated to the radar, and the electromagnetic waves reflected by the target received by the radar are the echo signals reflected by the target. The radar calculates the position information of the target relative to the radar according to the echo signals, and reports the position information of the target relative to the radar to the client, and the position information may include an actual distance of the target from the radar and the bearing of the target relative to the radar. After receiving the position information of the target relative to the radar, the client may carry out a coordinate conversion to obtain the position information of the target relative to the radar in the background image, so as to determine the position of the target in the background image according to the position and the orientation of the radar in the background image and the position information of the target relative to the radar in the background image.

S204: Obtaining an Internet protocol address and a port number of the camera for tracking and monitoring the target, and determining, according to the stored correspondence and the obtained Internet protocol address and the port number of the camera for tracking and monitoring the target, the position of the camera for tracking and monitoring the target in the background image, wherein the correspondence is a correspondence between Internet protocol addresses and ports number of the cameras associated with the radar and positions thereof.

When the radar detects that the target is intruding into the detection range of the radar, in a case where it is necessary to track and monitor the target, the radar determines a camera for tracking and monitoring the target according to the pre-configured radar-camera linkage strategy, and converts the position information of the target relative to the radar into the position information of the target relative to the camera according to the relative position coordinate conversion formula between the radar and the camera for tracking and monitoring the target and sends it to the camera, so that the camera may track and monitor the target. For example, the camera is a ball camera, and after receiving the position information of the target relative to the ball camera itself, the ball camera may adjust a PTZ value (including at least one of a horizontal angle, a pitch angle and the zoom of the camera) to track and monitor the target. Meanwhile, the radar reports the Internet protocol address and the port number of the camera to the client. The radar-camera linkage strategy may be to determine the cameras in the order of camera channel number from small to large, for respectively tracking and monitoring the targets detected by the radar in sequence according to the time sequence of detections of targets by the radar; or it may be to determine an idle camera which is currently closest to the target according to a distance between the camera associated with the radar and the target, for tracking and monitoring the target; also it may be other strategies for determining the camera for tracking and monitoring the target, and the present disclosure is not limited here.

After obtaining the Internet protocol address and the port number of the camera for tracking and monitoring the target, the client queries the stored correspondence between the Internet protocol address and the port number of the camera associated with the radar and the position of which in the background image, and determines the position of the camera for tracking and monitoring the target in the background image. In this way, it is only necessary to calculate and determine the position of the camera associated with the radar in the background image at the beginning, and then the position of the camera for tracking and monitoring the target in the background image may be obtained by looking for the correspondence, which reduces the system resource consumption, compared with calculating the position of the camera in the background image after determining the camera for tracking and monitoring the target each time; in addition, when determining the camera for tracking and monitoring the target, the radar needs to determine the Internet protocol address and the port number of the camera because it needs to control the camera to track the target, and herein, the Internet protocol address and the port number of the camera are directly reported through the radar, without querying other information of the camera, such as equipment identifier, which may improve the speed of the client to determine the position of the camera in the background image.

In one embodiment of the present disclosure, step S202 may not be carried out, and the correspondence between the Internet protocol address and the port number of the camera associated with the radar and the position of which in the background image may not be stored on the client in advance, then step S204 may be: obtaining the position information of the camera for tracking and monitoring the target relative to the radar, and determining, according to the position and the orientation of the radar in the background image and the position information of the camera for tracking and monitoring the target relative to the radar, the position of the camera for tracking and monitoring the target in the background image.

After determining the camera for tracking and monitoring the target, the radar reports the position information of the camera for tracking and monitoring the target relative to the radar to the client, and after obtaining the position information of the camera for tracking and monitoring the target relative to the radar, the client may obtain the position information of the camera relative to the radar in the background image through a coordinate conversion, so as to determine, according to the position and the orientation of the radar and the position information of the camera relative to the radar in the background image, the position of the camera for tracking and monitoring the target in the background image.

S205: Identifying the target and the camera for tracking and monitoring the target.

Here, the target is identified at the position of the target in the background image, and the camera is identified at the position of the camera for tracking and monitoring the target in the background image, so that the user may intuitively observe the target and the camera in the client interface.

S206: Drawing and displaying, according to the position of the target in the background image and the position of the camera for tracking and monitoring the target in the background image, a pattern indicating that the camera tracks and monitors the target.

In this way, after drawing and displaying the pattern indicating that the camera tracks and monitors the target, the user may intuitively observe which camera is the one tracking the monitoring the target in the client interface according to the pattern. As the target moves in the radar detection area, after determining the position of the target in the background image and the position of the camera for tracking and monitoring the target in the background image each time, the process of drawing a pattern indicating that the camera tracks and monitors the target may be to update the pattern. That is, when drawing a pattern, a previously drawn pattern may be emptied, then a current pattern is drawn according to the currently determined position of the target in the background image and the position of the camera in the background image, so as to vividly show the effect of tracking and monitoring of the target by the camera in real time as the target moves, so that the user may intuitively observe the whole process of tracking and monitoring of the target by the camera in the client interface, which improves the sense of the user experience.

S206 may be the following Step 1 or Step 2 or Step 3.

Step 1: Drawing and displaying a line segment or a dotted line with the position of the camera for tracking and monitoring the target in the background image as a starting point and the position of the target in the background image as an end point.

Specifically, the line segment or the dotted line may be drawn, according to preset thickness and color, with the position of the camera for tracking and monitoring the target in the background image as the starting point and the position of the target in the background image as the end point. For example, reference may be made to Fig. 2(a), which is a schematic diagram of the client interface according to an embodiment of the present disclosure, it can be seen from the client interface that camera 1 in the map image is tracking and monitoring target A and camera 2 is tracking and monitoring target B.

Step 2: Drawing and displaying a triangle or a sector with the position of the camera for tracking and monitoring the target in the background image as a vertex and a preset angle as an angle of the triangle or the sector at the vertex, wherein the triangle or the sector covers the position of the target in the background image.

Specifically, the triangle or the sector may be drawn according to a preset color. Here, the triangle may be an acute triangle, a right triangle, etc., and the triangle may be an isosceles triangle, in this way, the isosceles triangle or the sector may vividly indicate that a monitoring direction of the camera is from the camera to the target, which more vividly indicates a monitoring angle of the camera.

The isosceles triangle may be an isosceles triangle with the position of the target in the background image as a midpoint of a bottom edge of the isosceles triangle, the position of the camera that is tracking and monitoring the target in the background image as a vertex opposite to the bottom edge of the isosceles triangle, and a preset angle as an included angle between two waists of the isosceles triangle; it may also be an isosceles triangle with the position of the camera for tracking and monitoring the target in the background image as the vertex opposite to the bottom edge of the isosceles triangle, and the preset angle as the included angle between two waists of the isosceles triangle, and a connection line between the vertex opposite the bottom edge of the isosceles triangle and the midpoint of the bottom edge passes through the position of the target in the background image. The sector may be a sector with the position of the target in the background image as a midpoint of an arc or a chord of the sector, the position of the camera for tracking and monitoring the target in the background image as a vertex of the sector, and the preset angle as a central angle of the sector; it may also be a sector with the position of the camera for tracking and monitoring the target in the background image as the vertex of the sector and the preset angle as the central angle of the sector, and a connection line between the vertex of the sector and the midpoint of the arc passes through the position of the target in the background image. For example, reference may be made to Fig. 2(b), which is a schematic diagram of the client interface according to another embodiment of the present disclosure, it can be seen from the client interface that camera 1 in the map image is tracking and monitoring target A and camera 2 is tracking and monitoring target B.

In this way, the preset angle may be expressed as the monitoring angle of the camera for tracking and monitoring the target, and the drawn isosceles triangle or sector may vividly indicate that the monitoring direction of the camera is from the camera to the target. Drawing the pattern indicating that the camera tracks and monitors the target by drawing an isosceles triangle or a sector, the monitoring direction, the monitoring angle and the monitoring range of the camera may be simulated and displayed more vividly, which further improves the sense of user experience.

Step 3: Drawing and displaying, according to the position of the target in the background image and the position of the camera for tracking and monitoring the target in the background image, a mark indicating that the target and the camera correspond to each other.

Specifically, the mark may be a symbol mark, for example, drawing the same symbol at a preset distance from the target and a preset distance from the camera for tracking and monitoring the target in the background image; or drawing the same symbol at the periphery of the target in the background image and the periphery of the camera for tracking and monitoring the target; also drawing the same symbol inside the target and inside the camera for tracking and monitoring the target in the background image. The mark may also be a color mark, for example, the target and the camera for tracking and monitoring the target may be identified as the same color in the background image. For example, reference may be made to Fig. 2(c), which is a schematic diagram of the client interface according to yet another embodiment of the present disclosure, it can be seen from the client interface that there is the same symbol in vicinity of camera 1 and in vicinity of target A, and there is the same symbol in vicinity of camera 2 and in vicinity of target B, thereby learning that camera 1 is tracking and monitoring target A and camera 2 is tracking and monitoring target B. Through drawing of the mark indicating that the target and the camera correspond to each other, the user may determine which camera is the one tracking the monitoring target in the client interface according to the mark.

Here, step S205 may be carried out before step S206, or step S206 may be carried out before step S205, also step S205 and step S206 may be carried out at the same time, which is not limited here.

In one embodiment of the present disclosure, after determining the position of the target in the background image, the client will also store the position information (such as coordinate data) of the target in the background image, while drawing the pattern indicating that the camera tracks and monitors the target, it will also draw the movement trajectory of the target according to all the stored position information of the target. In this way, the user may intuitively observe the movement trajectory of the target in the client interface, which improves the sense of the user experience.

In one embodiment of the present disclosure, the client also obtains a monitoring video taken by the camera for tracking and monitoring the target, and plays, according to a preset correspondence between the camera associated with the radar and the video playing window, the monitoring video in a video playing window corresponding to the camera for tracking and monitoring the target. In this way, the monitoring video taken by the camera may be closely combined with the target through the pattern indicating that the camera tracks and monitors the target. When the user wants to watch the monitoring video of a concerned target in the client interface, he may determine a camera to track and monitor the concerned target in combination with the pattern indicating that the camera tracks and monitors the target, so as to quickly locate the video playing window corresponding to the camera tracking and monitoring the concerned target and watch the monitoring video of the concerned target, so as to improve the sense of the user experience.

The embodiment of the present disclosure provides another method for tracking, monitoring and displaying a target, which realizes that when the target is intruding into the radar detection area, the user may intuitively observe that which camera is tracking and monitoring the target in the client interface according to the pattern, and as the target moves in the radar detection area, the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

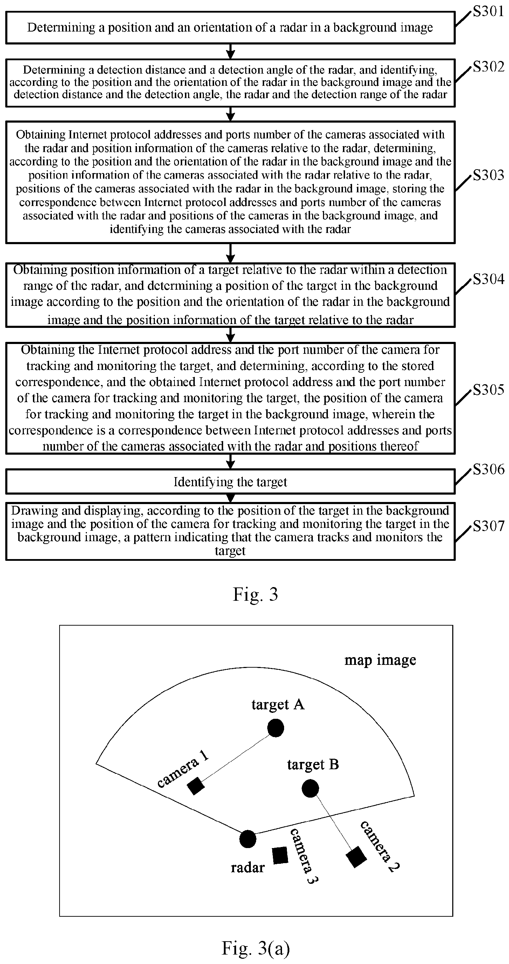

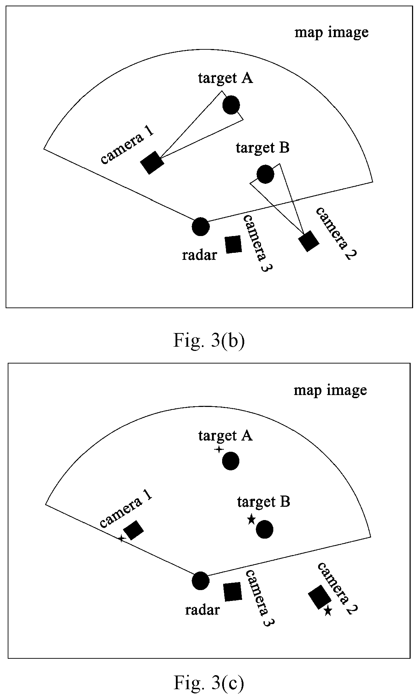

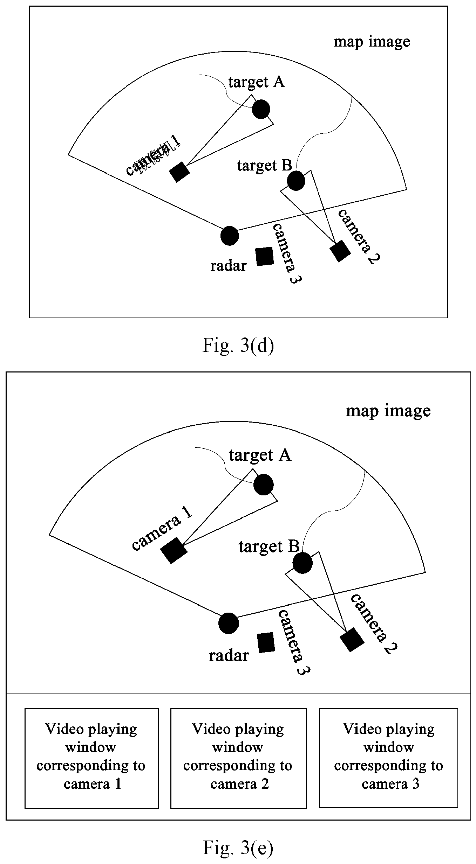

Referring to Fig. 3, Fig. 3 is a schematic flow diagram of A method for tracking, monitoring and displaying a target according to yet another embodiment of the present disclosure, which includes:
S301: Determining a position and an orientation of a radar in a background image.

The specific description of step S301 is detailed in step S201, and the embodiment of the present disclosure will not be repeated here.

In one embodiment of the present disclosure, the background image is a map image, and the position in the background image is the map position. Therefore, the effect presented by the client interface is more realistic, which improves the sense of the user experience.

S302: Determining a detection distance and a detection angle of the radar, and identifying, according to the position and the orientation of the radar in the background image and the detection distance and the detection angle, the radar and a detection range of the radar.

Specifically, the radar may report the detection distance and the detection angle of the radar to the client after receiving the signal of successful communication connection with the client; or the client may send a request to the radar to obtain the detection distance and the detection angle of the radar, and the radar may report the detection distance and the detection angle of the radar to the client after receiving the request. After receiving the detection distance and the detection angle of the radar, the client converts the detection distance into coordinates to obtain the detection distance of the radar in the background image, identifies the radar at the position of the radar in the background image, and draws, according to the detection angle, the orientation and the detection distance of the radar in the background image, a sector area to identify the detection range of the radar. Therefore, the user may intuitively observe the position of the radar and the detection direction and the detection range of the radar in the client interface, which improves the sense of the user experience.

S303: Obtaining Internet protocol addresses and ports number of the cameras associated with the radar and position information of the cameras relative to the radar, determining, according to the position and the orientation of the radar in the background image and the position information of the cameras associated with the radar relative to the radar, positions of the cameras associated with the radar in the background image, storing the correspondence between Internet protocol addresses and ports number of the cameras associated with the radar and positions of the cameras in the background image, and identifying the cameras associated with the radar.

The specific description of step S303 is detailed in step S202. Here, in contrast to step S202, after determining the positions of the cameras associated with the radar in the background image, the cameras associated with the radar are further identified at the positions of the cameras associated with the radar in the background image, so that the user may intuitively observe the positions of the cameras associated with the radar in the client interface ,which improves the sense of the user experience.

A sequence of steps S302 and S303 is not limited. Step S302 may be carried out before step S303, or step S303 may be carried out before step S302. Also the detection distance and the detection angle of the radar may be obtained and the position of the camera associated with the radar in the background image may be determined first, and the radar, the detection range of the radar and the camera associated with the radar are identified later.

S304: Obtaining position information of a target relative to the radar within a detection range of the radar, and determining a position of the target in the background image according to the position and the orientation of the radar in the background image and the position information of the target relative to the radar.

The specific description of step S304 is detailed in step S203, and the embodiment of the present disclosure will not be repeated here.

S305: Obtaining the Internet protocol address and the port number of the camera for tracking and monitoring the target, and determining, according to the stored correspondence, and the obtained Internet protocol address and the port number of the camera for tracking and monitoring the target, the position of the camera for tracking and monitoring the target in the background image, wherein the correspondence is a correspondence between Internet protocol addresses and ports number of the cameras associated with the radar and positions thereof.

The specific description of step S305 is detailed in step S204, and the embodiment of the present disclosure will not be repeated here.

In one embodiment of the present disclosure, the Internet protocol address and the port number of the camera associated with the radar may not be obtained, and the correspondence between the Internet protocol addresses and the ports number of the cameras associated with the radar and the position of which in the background image may not be stored on the client in advance, then step S305 may be: obtaining the position information of the camera for tracking and monitoring the target relative to the radar, and determining the position of the camera for tracking and monitoring the target in the background image according to the position and the orientation of the radar in the background image and the position information of the camera for tracking and monitoring the target relative to the radar.

The specific description of this step is detailed in the embodiment shown in Fig. 2, and the embodiment of the present disclosure will not be repeated here.

S306: Identifying the target.

The target is identified at the position of the target in the background image, so that the user may intuitively observe the target in the client interface. Here, the cameras associated with radar have been identified at the position of the cameras associated with radar in the background image, and the cameras associated with radar include the camera for tracking and monitoring the target, therefore, after the identification of the cameras associated with radar, i.e., the identification operation of the camera for tracking and monitoring the target is completed, the identification of the camera for tracking and monitoring the target may not be repeated.

S307: Drawing and displaying, according to the position of the target in the background image and the position of the camera for tracking and monitoring the target in the background image, a pattern indicating that the camera tracks and monitors the target.

After drawing the pattern indicating that the camera tracks and monitors the target, the user may intuitively observe which camera is the one tracking and monitoring the target in the client interface according to the pattern. As the target moves in the radar detection area, after determining the position of the target in the background image and the position of the camera for tracking and monitoring the target in the background image each time, the process of drawing the pattern indicating that the camera tracks and monitors the target may be updating the pattern. That is, when drawing the pattern, a previously drawn pattern may be emptied, then a current pattern is drawn according to the position of the target in the background image and the position of the camera in the background image currently determined, so as to vividly show the effect of the tracking and monitoring of the target by the camera in real time as the target moves, so that the user may intuitively observe the whole process of the tracking and monitoring of the target by the camera in the client interface, which improves the sense of the user experience.

S307 may be the following Step 1 or Step 2 or Step 3.

Step 1: Drawing and displaying a line segment or a dotted line with the position of the camera for tracking and monitoring the target in the background image as a starting point and the position of the target in the background image as an end point.

Specifically, the line segment or the dotted line may be drawn, according to preset thickness and color, with the position of the camera for tracking and monitoring the target in the background image as the starting point and the position of the target in the background image as the end point. For example, reference may be made to Fig. 3(a), which is a schematic diagram of the client interface according to yet another embodiment of the present disclosure, it can be obtained from the client interface the position of the radar in the map image and the detection range of the radar, and it can be observed the positions of cameras (camera 1, camera 2 and camera 3) associated with the radar, wherein camera 1 is tracking and monitoring target A, camera 2 is tracking and monitoring target B, and camera 3 is not tracking and monitoring the target.

Step 2: Drawing and displaying a triangle or a sector with the position of the camera for tracking and monitoring the target in the background image as a vertex and a preset angle as an angle of the triangle or the sector at the vertex, wherein the triangle or the sector covers the position of the target in the background image.

Specifically, the triangle or the sector may be drawn according to a preset color. Here, the triangle may be an acute triangle, a right triangle, etc., and the triangle may be an isosceles triangle, in this way, the isosceles triangle or the sector may vividly indicate that a monitoring direction of the camera is from the camera to the target, which more vividly indicates a monitoring angle of the camera.

The isosceles triangle may be an isosceles triangle with the position of the target in the background image as a midpoint of a bottom edge of the isosceles triangle, the position of the camera that is tracking and monitoring the target in the background image as a vertex opposite to the bottom edge of the isosceles triangle, and a preset angle as an included angle between two waists of the isosceles triangle; it may also be an isosceles triangle with the position of the camera for tracking and monitoring the target in the background image as the vertex opposite to the bottom edge of the isosceles triangle, and the preset angle as the included angle between two waists of the isosceles triangle, and a connection line between the vertex opposite the bottom edge of the isosceles triangle and the midpoint of the bottom edge passes through the position of the target in the background image. The sector may be a sector with the position of the target in the background image as a midpoint of an arc or a chord of the sector, the position of the camera for tracking and monitoring the target in the background image as a vertex of the sector, and the preset angle as a central angle of the sector; it may also be a sector with the position of the camera for tracking and monitoring the target in the background image as the vertex of the sector and the preset angle as the central angle of the sector, and a connection line between the vertex of the sector and the midpoint of the arc passes through the position of the target in the background image. For example, reference may be made to Fig. 3(b), which is a schematic diagram of the client interface according to yet another embodiment of the present disclosure, it can be obtained from the client interface the position of the radar in the map image and the detection range of the radar, and it can be observed the positions of cameras (camera 1, camera 2 and camera 3) associated with the radar, wherein camera 1 is tracking and monitoring target A, camera 2 is tracking and monitoring target B, and camera 3 is not tracking and monitoring the target.

In this way, the preset angle may be expressed as the monitoring angle of the camera, and the drawn isosceles triangle or sector may vividly indicate that the monitoring direction of the camera is from the camera to the target. Drawing the pattern indicating that the camera tracks and monitors the target by drawing an isosceles triangle or a sector, the monitoring direction, the monitoring angle and the monitoring range of the camera may be simulated and displayed more vividly, which further improves the sense of user experience.

Step 3: Drawing and displaying, according to the position of the target in the background image and the position of the camera for tracking and monitoring the target in the background image, a mark indicating that the target and the camera correspond to each other.

Specifically, the same mark may be drawn for the target and the camera for tracking and monitoring the target. The mark may be a symbol mark, for example, the same symbol may be drawn at a preset distance from the target and a preset distance from the camera for tracking and monitoring the target in the background image; or the same symbol may be drawn at the periphery of the target in the background image and the periphery of the camera for tracking and monitoring the target; also the same symbol may be drawn inside the target and inside the camera for tracking and monitoring the target in the background image. The mark may also be a color mark, for example, the target and the camera for tracking and monitoring the target may be identified in the same color in the background image. In some cases, when the camera associated with radar is identified at the position of the camera associated with radar in the background image, different symbol marks or color marks will be made for different camera identifications, then the marks contained in the camera identifications may be determined according to the positions of the cameras in the background image, and the same mark as that contained in the camera identification may be drawn for the target. For example, the mark is a color mark, and the same color as contained in the camera identification is drawn for the target; or the mark is a symbol mark, and the same symbol as contained in the camera identification is drawn for the target, so that the mark corresponding to the target and the mark corresponding to the camera correspond to each other. By drawing a mark indicating that the target and the camera correspond to each other, the user may determine according to the mark which camera is the one tracking the monitoring the target in the client interface.

For example, reference may be made to Fig. 3(c), which is a schematic diagram of the client interface according to yet another embodiment of the present disclosure, it can be obtained from the client interface the position of the radar in the map image and the detection range of the radar, and it can be observed the positions of the cameras (camera 1, camera 2 and camera 3) associated with the radar, wherein there is the same symbol in vicinity of camera 1 and in vicinity of target A, and there is the same symbol in vicinity of camera 2 and in vicinity of target B, it can be known that camera 1 is tracking and monitoring target A, camera 2 is tracking and monitoring target B, and camera 3 is not tracking and monitoring the target.

Here, step S306 may be carried out before step S307, or step S307 may be carried out before step S306, also step S306 and step S307 may be carried out at the same time, which is not limited here.

In one embodiment of the present disclosure, after determining the position of the target in the background image, the client will also store the position information (such as coordinate data) of the target in the background image, while drawing the pattern indicating that the camera tracks and monitors the target, it will also draw the movement trajectory of the target according to all the stored position information of the target. For example, reference may be made to Fig. 3(d), which is a schematic diagram of the client interface according to yet another embodiment of the present disclosure, it can be obtained from the client interface the position of the radar in the map image and the detection range of the radar, and it can be observed the positions of the cameras (camera 1, camera 2 and camera 3) associated with the radar, wherein camera 1 is tracking and monitoring target A, camera 2 is tracking and monitoring target B, and camera 3 is not tracking and monitoring the target. In this way, the user may intuitively observe the movement trajectory of the target in the client interface, which improves the sense of the user experience.

In one embodiment of the present disclosure, the client also obtains a monitoring video taken by the camera for tracking and monitoring the target, and plays the monitoring video in a video playing window corresponding to the camera for tracking and monitoring the target, according to a preset correspondence between the cameras associated with the radar and the video playing window. For example, reference may be made to Fig. 3(e), which is a schematic diagram of the client interface according to yet another embodiment of the present disclosure, it can be obtained from the client interface the position of the radar in the map image and the detection range of the radar, and it can be observed the positions of cameras (camera 1, camera 2 and camera 3) associated with the radar, and the movement trajectories of target A and target B; and it can be obtained from the client interface that camera 1 is tracking and monitoring target A, camera 2 is tracking and monitoring target B, and camera 3 is not tracking and monitoring the target. Therefore, it can be known that the video played by the video playback window corresponding to camera 1 is a video taken by monitoring of target A, the video playback window corresponding to camera 2 is a video taken by monitoring of target B. In this way, the monitoring video taken by the camera may be closely combined with the target through the pattern indicating that the camera tracks and monitors the target. When the user wants to watch the monitoring video of a concerned target in the client interface, he may determine the camera tracking and monitoring the concerned target in combination with the pattern indicating that the camera tracks and monitors the target, so as to quickly locate the video playing window corresponding to the camera tracking and monitoring the concerned target and watch the monitoring video of the concerned target, so as to improve the sense of the user experience.

The embodiment of the present disclosure provides another method for tracking, monitoring and displaying a target, which realizes that when the target is intruding into the radar detection area, the user may intuitively observe that which camera is tracking and monitoring the target in the client interface according to the pattern, and as the target moves in the radar detection area, the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

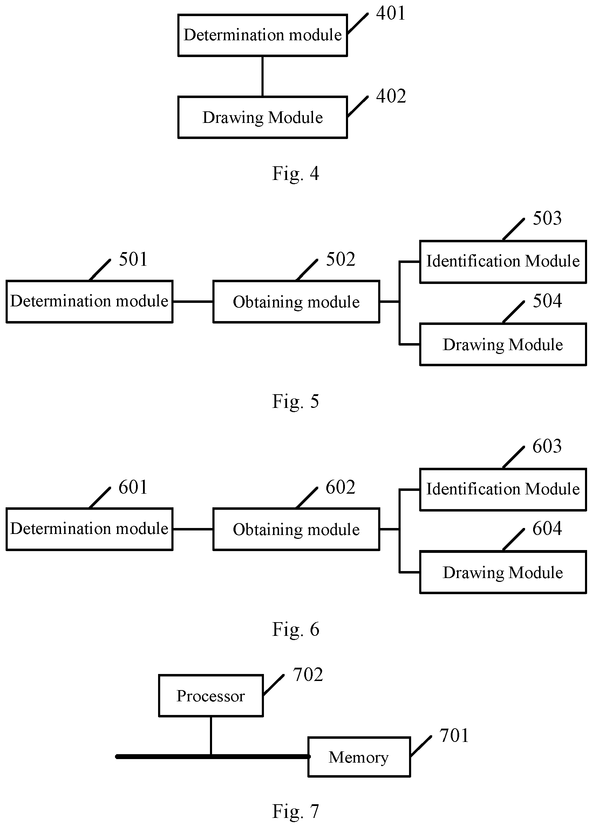

Referring to Fig. 4, Fig. 4 is a schematic structural diagram of An apparatus for tracking, monitoring and displaying a target according to an embodiment of the present disclosure, which includes:
A determination module 401 is configured to determine a position of a target within a detection range of a radar, and determine a position of a camera for tracking and monitoring the target, wherein the camera is one of cameras associated with the radar.
A drawing module 402 is configured to draw and display, according to the position of the target and the position of the camera for tracking and monitoring the target, a pattern indicating that the camera tracks and monitors the target.

In one embodiment of the present disclosure, the drawing module 402 may be specifically configured to empty the currently displayed patterns; and update drawing and display patterns indicating that the camera tracks and monitors the target according to the position of the target and the position of the camera for tracking and monitoring the target.

The embodiment of the present disclosure provides An apparatus for tracking, monitoring and displaying a target. By determining the position of the target within the detection range of the radar, determining the position of the camera for tracking and monitoring the target, wherein the camera is one of cameras associated with the radar, and drawing and displaying, according to the position of the target and the position of the camera, the pattern indicating that the camera tracks and monitors the target, so that when a target intrudes into the radar detection area, the user may intuitively observe that which camera is tracking and monitoring the target in the client interface according to the pattern, and as the target moves in the radar detection area, the position of the target and the position of the camera for tracking and monitoring the target may be determined in real time, and the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

Referring to Fig. 5, Fig. 5 is a schematic structural diagram of An apparatus for tracking, monitoring and displaying a target according to another embodiment of the present disclosure, which includes:
A determination module 501 is configured to determine a position and an orientation of a radar in a background image; to determine a position of a target in the background image according to the position and the orientation of the radar in the background image and position information of the target relative to the radar; and to determine a position of a camera for tracking and monitoring the target in the background image according to a pre-stored correspondence between Internet protocol addresses and ports number of the cameras associated with the radar and the positions thereof in the background image, and the obtained Internet protocol address and port number of the camera for tracking and monitoring the target.
An obtaining module 502 is configured to obtain the position information of the target relative to the radar within a detection range of the radar; and to obtain the Internet protocol address and the port number of the camera for tracking and monitoring the target.
An identification module 503 is configured to identify the target and the camera.
A drawing module 504 is configured to draw and display, according to the position of the target in the background image and the position of the camera in the background image, a pattern indicating that the camera tracks and monitors the target.
A drawing module is configured to draw and display a line segment or a dotted line with the position of the camera in the background image as a starting point and the position of the target in the background image as an end point; or
   configured to draw and display a triangle or a sector with the position of the camera in the background image as a vertex and a preset angle as an angle of the triangle or the sector at the vertex, wherein the triangle or the sector covers the position of the target in the background image; or
   configured to draw and display, according to the position of the target in the background image and the position of the camera in the background image, a mark indicating that the target and the camera correspond to each other.

In one embodiment of the present disclosure, the triangle includes an isosceles triangle that takes the position of the target in the background image as a midpoint of a bottom edge of the isosceles triangle, the position of the camera for tracking and monitoring the target in the background image as a vertex opposite to the bottom edge of the isosceles triangle, and a preset angle as an included angle between two waists of the isosceles triangle; alternatively, an isosceles triangle that takes the position of the camera for tracking and monitoring the target in the background image as the vertex opposite to the bottom edge of the isosceles triangle, and the preset angle as the included angle between two waists of the isosceles triangle, and a connection line between the vertex opposite to the bottom edge of the isosceles triangle and the midpoint of the bottom edge passes through the position of the target in the background image.

The sector includes a sector that takes the position of the target in the background image as a midpoint of an arc or a chord of the sector, the position of the camera for tracking and monitoring the target in the background image as a vertex of the sector, and the preset angle as the central angle of the sector; alternatively, a sector that takes the position of the camera for tracking and monitoring the target in the background image as the vertex of the sector, and the preset angle as the central angle of the sector, and a connection line between the vertex of the sector and the midpoint of the arc passes through the position of the target in the background image.

In one embodiment of the present disclosure, the determination module is configured to determine a position and an orientation of a radar in a background image; to determine a position of a target in the background image according to the position and the orientation of the radar in the background image and position information of the target relative to the radar; and to determine a position of a camera for tracking and monitoring the target in the background image according to the position and the orientation of the radar in the background image and the position information of the camera for tracking and monitoring the target relative to the radar; and
the obtaining module is configured to obtain the position information of the target relative to the radar within a detection range of the radar; and to obtain the position information of the camera for tracking and monitoring the target relative to the radar.

In one embodiment of the present disclosure, the drawing module is further configured to store the position information of the target in the background image, and draw and display a movement trajectory of the target according to all the stored position information of the target.

In one embodiment of the present disclosure, the obtaining module is further configured to obtain a monitoring video taken by the camera for tracking and monitoring the target; and
the apparatus further includes a video playing module, which is configured to play, according to a preset correspondence between the cameras associated with the radar and video playing windows, the monitoring video in a video playing window corresponding to the camera for tracking and monitoring the target.

In one embodiment of the present disclosure, the background image is a map image, and the position in the background image is a map position.

The embodiment of the present disclosure provides another apparatus for tracking, monitoring and displaying a target, which realizes that when a target is intruding into a radar detection area, a user may intuitively observe according to the pattern in the client interface that which camera is tracking and monitoring the target, and as the target moves in the radar detection area, the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

Referring to Fig. 6, Fig. 6 is a schematic structural diagram of An apparatus for tracking, monitoring and displaying a target according to yet another embodiment of the present disclosure, which includes:
A determination module 601 is configured to determine a position and an orientation of a radar in the background image, and a detection distance and a detection angle thereof; to determine a position of a target in the background image according to the position and the orientation of the radar in the background image and position information of the target relative to the radar; to determine positions of the cameras associated with the radar in the background image according to the position and the orientation of the radar in the background image and position information of the cameras associated with the radar relative to the radar; to store a correspondence between Internet protocol addresses and ports number of the cameras associated with the radar and the position thereof in the background image; and to determine the position of the camera for tracking and monitoring the target in the background image according to the stored correspondence and the obtained Internet protocol address and the port number of the camera for tracking and monitoring the target.
An obtaining module 602 is configured to obtain the position information of the target relative to the radar within a detection range of the radar; to obtain the Internet protocol addresses and the ports number of the cameras associated with the radar and the position information of which relative to the radar; and to obtain the Internet protocol address and the port number of the camera for tracking and monitoring the target.
An identification module 603 is configured to identify the radar and the detection range of the radar according to the position and the orientation of the radar in the background image and the detection distance and the detection angle thereof; to identify the cameras associated with the radar; and to identify the target.
A drawing module 604 is configured to draw and display, according to the position of the target in the background image and the position of the camera for tracking and monitoring the target in the background image, a pattern indicating that the camera tracks and monitors the target.

The drawing module is configured to draw and display a line segment or a dotted line with the position of the camera for tracking and monitoring the target in the background image as a starting point and the position of the target in the background image as an end point; alternatively, to draw and display a triangle or a sector with the position of the camera for tracking and monitoring the target in the background image as a vertex and a preset angle as an angle of the triangle or the sector at the vertex, wherein the triangle or the sector covers the position of the target in the background image; alternatively, to draw and display a mark indicating that the target and the camera correspond to each other according to the position of the target in the background image and the position of the camera for tracking and monitoring the target in the background image.

In one embodiment of the present disclosure, the triangle includes an isosceles triangle that takes the position of the target in the background image as a midpoint of a bottom edge of the isosceles triangle, the position of the camera for tracking and monitoring the target in the background image as a vertex opposite to the bottom edge of the isosceles triangle, and a preset angle as an included angle between two waists of the isosceles triangle; alternatively, an isosceles triangle that takes the position of the camera for tracking and monitoring the target in the background image as the vertex opposite to the bottom edge of the isosceles triangle, and the preset angle as the included angle between two waists of the isosceles triangle, and a connection line between the vertex opposite to the bottom edge of the isosceles triangle and the midpoint of the bottom edge passes through the position of the target in the background image.

The sector includes a sector that takes the position of the target in the background image as a midpoint of an arc or a chord of the sector, the position of the camera for tracking and monitoring the target in the background image as a vertex of the sector, and the preset angle as the central angle of the sector; alternatively, a sector that takes the position of the camera for tracking and monitoring the target in the background image as the vertex of the sector, and the preset angle as the central angle of the sector, and a connection line between the vertex of the sector and the midpoint of the arc passes through the position of the target in the background image.

In one embodiment of the present disclosure, the determination module is configured to determine a position and an orientation of the radar in a background image, and a detection distance and a detection angle thereof; to determine a position of a target in the background image according to the position and the orientation of the radar in the background image and position information of the target relative to the radar; to determine positions of cameras associated with the radar in the background image according to the position and the orientation of the radar in the background image and position information of the cameras associated with the radar relative to the radar; and to determine the position of the camera for tracking and monitoring the target in the background image according to the position and the orientation of the radar in the background image and the position information of the camera for tracking and monitoring the target relative to the radar; and
the obtaining module is configured to obtain the position information of the target relative to the radar within the detection range of the radar; to obtain the position information of the cameras associated with the radar relative to the radar; and to obtain the position information of the camera for tracking and monitoring the target relative to the radar.

In one embodiment of the present disclosure, the drawing module is further configured to store the position information of the target in the background image, and draw and display a movement trajectory of the target according to all the stored position information of the target.

In one embodiment of the present disclosure, the obtaining module is further configured to obtain a monitoring video taken by the camera for tracking and monitoring the target; and
the apparatus further includes a video playing module, which is configured to playing, according to a preset correspondence between the cameras associated with the radar and video playing windows, a monitoring video in a video playing window corresponding to the camera for tracking and monitoring the target.

In one embodiment of the present disclosure, the background image is a map image, and the position in the background image is a map position.

The embodiment of the present disclosure provides another apparatus for tracking, monitoring and displaying a target, which realizes that when a target is intruding into a radar detection area, a user may intuitively observe according to the pattern in the client interface that which camera is tracking and monitoring the target, and as the target moves in the radar detection area, the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

Referring to Fig. 7, Fig. 7 is a schematic structural diagram of an electronic device according to an embodiment of the present disclosure, which includes:
Memory 701 is configured to store computer programs.

The processor 702 is configured to implement, when executing the programs stored in the memory, the following steps:
determining a position of a target within a detection range of a radar;
determining a position of a camera for tracking and monitoring the target, wherein the camera is one of cameras associated with the radar; and
drawing and displaying, according to the position of the target and the position of the camera, a pattern indicating that the camera tracks and monitors the target.

In one embodiment of the present disclosure, when determining a position of a target within a detection range of a radar, the processor 702 may be specifically configured to: determine a position and an orientation of the radar; obtain position information of the target relative to the radar within the detection range of the radar; and determine the position of the target according to the position and the orientation of the radar and the position information of the target relative to the radar.

In one embodiment of the present disclosure, when determining a position of a camera for tracking and monitoring the target, the processor 702 may be specifically configure to: obtain an Internet protocol address and a port number of the camera for tracking and monitoring the target; and determine, according to a pre-stored correspondence and the obtained Internet protocol address and port number of the camera for tracking and monitoring the target, the position of the camera for tracking and monitoring the target, wherein the correspondence is a correspondence between Internet protocol addresses and the ports number of the cameras associated with the radar and the positions thereof.

In one embodiment of the present disclosure, when determining a position of a camera for tracking and monitoring the target, the processor 702 may be specifically configured to: determine a position and an orientation of the radar; obtain position information of the camera for tracking and monitoring the target relative to the radar; and determine, according to the position and the orientation of the radar and the position information of the camera for tracking and monitoring the target relative to the radar, the position of the camera for tracking and monitoring the target.

In one embodiment of the present disclosure, the processor 702 may be further configured to: determine a position, an orientation, a detection distance and a detection angle of the radar; and identify the radar and the detection range of the radar according to the position, the orientation, the detection distance and the detection angle of the radar.

In one embodiment of the present disclosure, the processor 702 may be further configured to: store the position of the target; and draw and display a movement trajectory of the target according to all the stored positions of the target.

In one embodiment of the present disclosure, the processor 702 may be further configured to: obtain a monitoring video taken by the camera for tracking and monitoring the target; play, according to a preset correspondence between the cameras associated with the radar and video playing windows, the monitoring video in a video playing window corresponding to the camera for tracking and monitoring the target.

In one embodiment of the present disclosure, the positions include positions in the background image, and the processor 702 may be further configured to identify the target and the camera.

When drawing and displaying, according to the position of the target and the position of the camera for tracking and monitoring the target, a pattern indicating that the camera tracks and monitors the target, the processor 702 may be specifically configured to: draw and display a line segment or a dotted line that takes the position of the camera for tracking and monitoring the target in the background image as a starting point and the position of the target in the background image as an end point; alternatively, draw and display a triangle or a sector that takes the position of the camera for tracking and monitoring the target in the background image as a vertex and a preset angle as central angle, wherein the triangle or the sector covers the position of the target in the background image; alternatively, draw and display a mark indicating that the target and the camera correspond to each other according to the position of the target in the background image and the position of the camera for tracking and monitoring the target in the background image.

In one embodiment of the present disclosure, the triangle includes an isosceles triangle that takes the position of the target in the background image as a midpoint of a bottom edge of the isosceles triangle, the position of the camera for tracking and monitoring the target in the background image as a vertex opposite to the bottom edge of the isosceles triangle, and a preset angle as an included angle between two waists of the isosceles triangle; alternatively, an isosceles triangle that takes the position of the camera for tracking and monitoring the target in the background image as the vertex opposite to the bottom edge of the isosceles triangle, and the preset angle as the included angle between two waists of the isosceles triangle, and a connection line between the vertex opposite to the bottom edge of the isosceles triangle and the midpoint of the bottom edge passes through the position of the target in the background image.

The sector includes a sector that takes the position of the target in the background image as a midpoint of an arc or a chord of the sector, the position of the camera for tracking and monitoring the target in the background image as a vertex of the sector, and the preset angle as a central angle of the sector; alternatively, a sector that takes the position of the camera for tracking and monitoring the target in the background image as the vertex of the sector, and the preset angle as the central angle of the sector, and a connection line between the vertex of the sector and the midpoint of the arc passes through the position of the target in the background image.

In one embodiment of that disclosure, the background image includes a map image.

In one embodiment of the present disclosure, when drawing and displaying, according to the position of the target and the position of the camera for tracking and monitoring the target, a pattern indicating that the camera tracks and monitors the target, it may be specifically configured to: empty the currently displayed pattern; and update drawing and display, according to the position of the target and the position of the camera for tracking and monitoring the target, the pattern indicating that the camera tracks and monitors the target.

In one embodiment of the present disclosure, the electronic device may further include a communication interface, a communication bus, an input-output interface and a display, wherein the memory, the processor, the input-output interface, the display and the communication interface communicate with each other through the communication bus.

The memory may include a high-speed random access memory and a non-transitory memory, such as at least one disk memory device, flash memory device or other transitory solid-state storage device, correspondingly, the memory may also include a memory controller to provide access to the memory by the processor and the input-output interface. The processor may be a general-purpose processor, including a central processing unit, and a network processor, etc., and the processor may also be a digital signal processor, an application specific integrated circuit, a field programmable gate array or other programmable logic devices, discrete gates or transistor logic devices, and discrete hardware components. The input-output interface forwards commands or data input by users through an input-output device (such as a sensor, a keyboard and a touch screen). The display displays various information to the user. The communication interface enables communication between the electronic device and other devices, for example, the communication interface may be wired or wirelessly connected to the network to connect to other external devices. The communication bus may be the peripheral component interconnect bus or the extended industry standard structure bus, etc., the communication bus may be divided into an address bus, a data bus and a control bus, etc.

The embodiment of the present disclosure provides an electronic device, by determining a position of a target within a detection range of a radar, determining a position of a camera for tracking and monitoring the target, wherein the camera is one of cameras associated with the radar, and drawing and displaying, according to the position of the target and the position of the camera, a pattern indicating that the camera tracks and monitors the target, which realizes that when a target is intruding into a radar detection area, a user may intuitively observe according to the pattern in the client interface that which camera is tracking and monitoring the target, and as the target moves in the radar detection area, the position of the target and the position of the camera for tracking and monitoring the target may be determined in real time, and the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

The embodiment of the present disclosure provides a non-transitory storage medium on which a computer program is stored, and when the computer program is executed by a processor, the steps of the method for tracking, monitoring and displaying a target provided by the embodiment of the present disclosure may be realized. The non-transitory storage medium may be read-only memory, random access memory, CD-ROM, magnetic tape, floppy disk, optical data storage device, etc. By determining a position of a target within a detection range of a radar, determining a position of a camera for tracking and monitoring the target, wherein the camera is one of cameras associated with the radar, and drawing and displaying, according to the position of the target and the position of the camera, a pattern indicating that the camera tracks and monitors the target, which realizes that when a target is intruding into a radar detection area, a user may intuitively observe according to the pattern in the client interface that which camera is tracking and monitoring the target, and as the target moves in the radar detection area, the position of the target and the position of the camera for tracking and monitoring the target may be determined in real time, and the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

The embodiment of the present disclosure provides a computer program product, which when running on a computer, may preform the steps of the method for tracking, monitoring and displaying a target provided by the embodiment of the present disclosure, the computer program product may include one or more computer instructions. When the computer program instructions are loaded and executed on a computer, the flow or function according to the embodiment of the present disclosure is realized in whole or in part. The computer may be a general-purpose computer, a special-purpose computer, a computer network, or other programmable devices. Computer instructions may be stored in non-transitory storage media or transmitted through non-transitory storage media. Non-transitory storage media may be of any available media that can be accessed by the computer or data storage devices such as servers and data centers that contain one or more available media integration. Available media may be magnetic media, optical media, semiconductor media, etc. By determining a position of a target within a detection range of a radar, determining a position of a camera for tracking and monitoring the target, wherein the camera is one of cameras associated with the radar, and drawing and displaying, according to the position of the target and the position of the camera, a pattern indicating that the camera tracks and monitors the target, a user may intuitively observe according to the pattern in the client interface that which camera is tracking and monitoring the target, and as the target moves in the radar detection area, the position of the target and the position of the camera for tracking and monitoring the target may be determined in real time, and the pattern indicating that the camera tracks and monitors the target may be drawn and displayed in real time, which vividly shows the effect of the tracking and monitoring of the target by the camera in real time as the target moves, so that the user may intuitively observe the whole process of the tracking and monitoring of the target by the camera in the client interface, which improves the sense of the user experience.

For the embodiments of the apparatus, the electronic devices, the non-transitory storage media and the computer program products, as they are basically similar to the method embodiments, the descriptions are relatively simple. Please refer to the partial description of the method embodiments for relevant information.

It should be noted that in this paper, the terms "comprising", "including" or any other variation thereof are intended to cover non-exclusive inclusion, so that a process, method, article or equipment that includes a series of elements includes not only those elements, but also other elements not explicitly listed, or elements inherent to the process, method, article or equipment. Without further limitation, the element defined by the statement"including a ......" does not exclude the existence of other same elements in the process, method, article or equipment including the elements.

Those skilled in the art may understand that all or part of the steps in the implementation of the above method may be completed by instructing relevant hardware through programs, which may be stored in computer-readable storage media, such as ROM/RAM, magnetic disk, optical disk, etc.

The above description is only preferred embodiments of the present disclosure, and is not intended to limit the scope of protection of the present disclosure. Any modification, equivalent replacement, improvement, etc. made within the spirit and principle of the present disclosure are included in the protection scope of the present disclosure.

## Claims

1. A method for tracking, monitoring and displaying a target, comprising:
determining a position of a target within a detection range of a radar;
determining a position of a camera for tracking and monitoring the target, wherein the camera is one of cameras associated with the radar; and
drawing and displaying, according to the position of the target and the position of the camera, a pattern indicating that the camera tracks and monitors the target.

2. The method according to claim 1, wherein determining a position of a target within a detection range of a radar, comprises:
determining a position and an orientation of the radar;
obtaining position information of the target relative to the radar within the detection range of the radar; and
determining the position of the target according to the position and the orientation of the radar and the position information of the target relative to the radar.

3. The method according to claim 1, wherein determining a position of a camera for tracking and monitoring the target, comprises:
obtaining an Internet protocol address and a port number of the camera for tracking and monitoring the target; and
determining, according to a pre-stored correspondence and the obtained Internet protocol address and the port number of the camera for tracking and monitoring the target, the position of the camera for tracking and monitoring the target, wherein the correspondence is a correspondence between Internet protocol addresses and ports number of the cameras associated with the radar and positions thereof.

4. The method according to claim 1, wherein determining a position of a camera for tracking and monitoring the target comprises:
determining a position and an orientation of the radar;
obtaining position information of the camera for tracking and monitoring the target relative to the radar; and
determining, according to the position and the orientation of the radar and the position information of the camera for tracking and monitoring the target relative to the radar, the position of the camera for tracking and monitoring the target.

5. The method according to claim 1, wherein the method further comprises:
determining a position, an orientation, a detection distance and a detection angle of the radar; and
identifying, according to the position, the orientation, the detection distance and the detection angle of the radar, the radar and the detection range of the radar.

6. The method according to claim 1, wherein after determining the position of the target within the detection range of the radar, the method further comprises:
storing positions of the target; and
drawing and displaying, according to all the stored positions of the target, a movement trajectory of the target.

7. The method according to claim 1, wherein the method further comprises:
obtaining a monitoring video taken by the camera for tracking and monitoring the target; and
playing, according to a preset correspondence between the cameras associated with the radar and video playing windows, the monitoring video in a video playing window corresponding to the camera for tracking and monitoring the target.

8. The method according to any of claims 1 to 7, wherein the positions comprises positions in a background image, and the method further comprises identifying the target and the camera;
wherein, drawing and displaying, according to the position of the target and the position of the camera, a pattern indicating that the camera tracks and monitors the target comprises:
drawing and displaying a line segment or a dotted line with the position of the camera in the background image as a starting point and the position of the target in the background image as an end point; or
drawing and displaying a triangle or a sector with the position of the camera in the background image as a vertex and a preset angle as an angle of the triangle or the sector at the vertex, wherein the triangle or the sector covers the position of the target in the background image; or
drawing and displaying, according to the position of the target in the background image and the position of the camera in the background image, a mark indicating that the target and the camera correspond to each other.

9. The method according to claim 8, wherein the triangle comprises an isosceles triangle, and the isosceles triangle comprises:
wherein the position of the target in the background image is a midpoint of an bottom edge of the isosceles triangle, the position of the camera in the background image is a vertex opposite to the bottom edge of the isosceles triangle, and the preset angle is an included angle between two waists of the isosceles triangle; or
wherein the position of the camera in the background image is the vertex opposite to the bottom edge of the isosceles triangle, and the preset angle is the included angle between two waists of the isosceles triangle, wherein a connection line between the vertex opposite to the bottom edge of the isosceles triangle and the midpoint of the bottom edge passes through the position of the target in the background image; and
the sector comprises:
wherein the position of the target in the background image is a midpoint of an arc or a chord of the sector, the position of the camera in the background image is the vertex of the sector and the preset angle is a central angle of the sector; or
wherein the position of the camera in the background image is the vertex of the sector, and the preset angle is the central angle of the sector, wherein a connection line between the vertex of the sector and the midpoint of the arc passes through the position of the target in the background image.

10. The method according to claim 8, wherein the background image comprises a map image.

11. The method according to claim 1, wherein drawing and displaying, according to the position of the target and the position of the camera, a pattern indicating that the camera tracks and monitors the target comprises:
emptying the currently displayed pattern; and
updating drawing and displaying, according to the position of the target and the position of the camera, the pattern indicating that the camera tracks and monitors the target.

12. An apparatus for tracking, monitoring and displaying a target, comprising:
a determination module, configured to determine a position of a target within a detection range of a radar, and determine a position of a camera for tracking and monitoring the target, wherein the camera is one of cameras associated with the radar; and
a drawing module, configured to draw and display, according to the position of the target and the position of the camera, a pattern indicating that the camera tracks and monitors the target.

13. The apparatus according to claim 12, wherein the apparatus further comprises:
an obtaining module, configured to obtain position information of the target relative to the radar within the detection range of the radar; and
the determination module is further configured to determine a position and an orientation of the radar, and determine the position of the target according to the position and the orientation of the radar and the position information of the target relative to the radar.

14. The apparatus according to claim 12, wherein the apparatus further comprises:
an obtaining module, configured to obtain an Internet protocol address and a port number of the camera for tracking and monitoring the target; and
the determination module is further configured to determine, according to a pre-stored correspondence and the obtained Internet protocol address and the port number of the camera for tracking and monitoring the target, the position of the camera for tracking and monitoring the target, wherein the correspondence is a correspondence between Internet protocol addresses and ports number of the cameras associated with the radar and positions thereof.

15. The apparatus according to claim 12, wherein the apparatus further comprises:
an obtaining module, configured to obtain position information of the camera for tracking and monitoring the target relative to the radar; and
the determination module is further configured to determine a position and an orientation of the radar, and determine, according to the position and the orientation of the radar and the position information of the camera for tracking and monitoring the target relative to the radar, the position of the camera for tracking and monitoring the target.

16. The apparatus according to claim 12, wherein the determination module is further configured to determine a position, an orientation, a detection distance and a detection angle of the radar; and
the apparatus further comprises an identification module configured to identify, according to the position, the orientation, the detection distance and the detection angle of the radar, the radar and the detection range of the radar.

17. The apparatus according to claim 12, wherein the drawing module is further configured to store positions of the target, and draw and display, according to all the stored positions of the target, a movement trajectory of the target.

18. The apparatus according to claim 12, wherein the obtaining module is further configured to obtain a monitoring video taken by the camera for tracking and monitoring the target; and
the apparatus further comprises a video playing module configured to play, according to a preset correspondence between the cameras associated with the radar and video playing windows, the monitoring video in a video playing window corresponding to the camera for tracking and monitoring the target.

19. The apparatus according to any of claims 12 to 18, wherein the position comprises positions in a background image; the apparatus further comprises an identification module configured to identify the target and the camera; and wherein
the drawing module is configured to draw and display a line segment or a dotted line with the position of the camera in the background image as a starting point and the position of the target in the background image as an end point; or
draw and display a triangle or a sector with the position of the camera in the background image as a vertex, and a preset angle as an angle of the triangle or the sector at the vertex, wherein the triangle or the sector covers the position of the target in the background image; or
draw and display, according to the position of the target in the background image and the position of the camera in the background image, a mark indicating that the target and the camera correspond to each other.

20. The apparatus according to claim 19, wherein the triangle comprises an isosceles triangle, and the isosceles triangle comprises:
wherein the position of the target in the background image is a midpoint of an bottom edge of the isosceles triangle, the position of the camera in the background image is a vertex opposite to the bottom edge of the isosceles triangle, and the preset angle is an included angle between two waists of the isosceles triangle; or
wherein the position of the camera in the background image is the vertex opposite to the bottom edge of the isosceles triangle, and the preset angle is the included angle between two waists of the isosceles triangle, wherein a connection line between the vertex opposite to the bottom edge of the isosceles triangle and the midpoint of the bottom edge passes through the position of the target in the background image; and
the sector comprises:
wherein the position of the target in the background image is a midpoint of an arc or a chord of the sector, the position of the camera in the background image is the vertex of the sector and the preset angle is a central angle of the sector; or
wherein the position of the camera in the background image is the vertex of the sector, and the preset angle is the central angle of the sector, wherein a connection line between the vertex of the sector and the midpoint of the arc passes through the position of the target in the background image.

21. The apparatus according to claim 19, wherein the background image comprises a map image.

22. The apparatus according to claim 12, wherein the drawing module is specifically configured to empty the currently displayed pattern; and update drawing and displaying, according to the position of the target and the position of the camera, the pattern indicating that the camera tracks and monitors the target.

23. An electronic device comprising a processor and a memory, wherein,
the memory is configured to store computer programs;
the processor is configured to execute the computer programs stored in the memory, to implement the method of any of claims 1 to 11.

24. A non-transitory storage medium on which a computer program is stored, which when executed by a processor, implement the method of any of claims 1 to 11.

25. A computer program product which when ruuning, execute the method of any one of claims 1 to 11.
